# EUROPÄISCHE PATENTSCHRIFT

(11) **EP 3 194 109 B1**
(45) Veröffentlichungstag und Bekanntmachung des Hinweises auf die Patenterteilung: **28.04.2021**
(21) Anmeldenummer: 15763921.2
(22) Anmeldetag: 16.09.2015
(51) Int. Cl.: B23K 26/08, B23K 26/361, B23K 26/082, B23K 101/34

(54) **VERFAHREN ZUR ENTFERNUNG EINER KUNSTSTOFFBESCHICHTUNG VON EINEM LEBENSMITTELLAIB**
METHOD FOR REMOVING A PLASTIC COATING FROM A BLOCK OF FOOD
PROCÉDÉ POUR ENLEVER UN REVÊTEMENT DE MATIÈRE PLASTIQUE D'UNE PORTION D'ALIMENT

(30) Priorität: 16.09.2014 DE 102014113323
(43) Veröffentlichungstag der Anmeldung: 26.07.2017
(73) Patentinhaber: DIL Deutsches Institut für Lebensmitteltechnik e.V, 49610 Quakenbrück (DE)
(72) Erfinder: SEEBAUM, Dirk, 79249 Merzhausen (DE)
(74) Vertreter: Taruttis, Stefan Georg
(86) Internationale Anmeldenummer: PCT/EP2015/071201
(87) Internationale Veröffentlichungsnummer: WO 2016/042020

(56) Entgegenhaltungen:
- EP-A2- 1 800 542
- WO-A2-2011/051567
- DE-A1-102005 019 008
- DE-A1-102011 115 412
- US-A- 4 486 645

## Beschreibung

Die Erfindung betrifft ein Verfahren zur Entfernung der Kunststoffbeschichtung von einem käselaib (siehe, zum Beispiel, EP 1 800 542 A2).

Bei der Herstellung von Lebensmittellaiben wird häufig außen eine Kunststoffbeschichtung aufgebracht. Dies ist insbesondere bei der Herstellung von Hart- und Semihartkäse der Fall. Bei deren Herstellung wird ein Reifeprozess durchgeführt, der für die spezifische Qualität des herzustellenden Käses ausschlaggebend ist. Dieser Reifeprozess macht es häufig erforderlich, dass der Käse zum Schutz vor Austrocknung und unter Umständen auch zum Schutz vor Schimmelbefall und anderen Fremdeinwirkungen mit einer Kunststoffbeschichtung versehen wird. Dieser Schritt wird auch als Plastifizierung bezeichnet.

Die Kunststoffbeschichtung des Lebensmittellaibes wird auch als Berindung oder Rinde des Lebensmittellaibs bezeichnet.

Nach der Durchführung des Reifeprozesses ist es üblicherweise erforderlich, dass diese Kunststoffbeschichtung entfernt wird, bevor dann eine Weiterverarbeitung des Käselaibes vorgenommen werden kann. Diese Entfernung wird auch als Entplastifizierung oder Entrindung der Käselaibe bezeichnet. Nach der Entfernung der Kunststoffbeschichtung wird dann der Käse geschnitten oder in für den Handel geeignete Blöckchen unterteilt oder auch direkt schneidfertig in den Handel gebracht. Dabei ist es häufig erforderlich, dass die Kunststoffbeschichtung als nicht verzehrfähig oder unerwünscht vollständig beseitigt wird, wobei gleichzeitig ein möglichst geringer Verlust der verkaufs- und verzehrfähigen Bestandteile des Lebensmittellaibs erfolgen soll, da ein solcher Verlust natürlich den Verkaufswert des Gesamtlaibs reduziert.

Mit dieser Entfernung der Kunststoffbeschichtung beschäftigt sich die Lebensmittelindustrie bereits seit langem. So wird in der DE 33 05 668 A1 vorgeschlagen, diese Entrindung oder Abschälung durch ein Fräsen oder Schaben vorzunehmen, wobei der Käselaib senkrecht zur Bearbeitungsrichtung zusammengedrückt wird, um die Schnittflächen weitgehend plan und somit die Verluste gering zu halten.

Aus der DE 197 35 595 A1 ist ein Vorschlag zum Entfernen der Umhüllungen von Lebensmittelprodukten wie etwa Käselaiben bekannt, bei dem Walzen mit profilierten Mantelflächen zum Erfassen und Abziehen der Umhüllungen vorgesehen sind. Derartige Walzen sind jedoch nicht für alle Kunststoffarten geeignet, insbesondere dann nicht, wenn eine besonders feste mechanische Verbindung der Kunststoffbeschichtung mit den Käselaibern eingetreten ist.

Aus der EP 1 800 542 B1, die den Oberbegriff des Anspruchs 1 bildet, ist ein Gerät zur Entfernung der Kunststoffbeschichtung von Käse bekannt, bei dem während der Schäloperation die Temperatur der Kunststoffbeschichtung auf einen Bereich eingestellt wird, der oberhalb der Glasungstemperatur, jedoch unterhalb von 30 °C liegt. Diese Temperatur soll nach Möglichkeit durch eine Infrarotwärmebehandlung erfolgen. Auch hier sind im Gerät nach Möglichkeit rotierende Walzen für die mechanische Schäloperation vorgesehen. Alternativ wird zum Aufreißen der Beschichtung auch ein Laser eingesetzt, um die Beschichtung in getrennte Teile und Abschnitte zu unterteilen.

Aus der US 4,486,645 A ist ein Verfahren zum Entfernen von Cellulosehüllen von Würstchen bekannt. Bei diesem Verfahren wird ein kontinuierlicher Laserstrahl eingesetzt, dem die Würstchen zugeführt werden. Dadurch soll die Cellulosehülle mit einem länglichen Schlitz versehen und dann abgezogen werden können.

Alle diese mechanischen Schälvorrichtungen, auch solche mit Schneidmessern und vergleichbaren Einrichtungen, sind sehr aufwändig. Dabei ist zu berücksichtigen, dass die in der Käseherstellung anfallenden Käselaibe Durchmesser von deutlich mehr als einem Meter besitzen, durchaus auch mehr als zwei Metern und daher entsprechende Gewichte bewegt und Längen abgeschnitten werden müssen. Ebenso ist zu berücksichtigen, dass durch zu großen Schnittverlust erhebliche Werte dem Lebensmittelabfall zugeführt werden und dann auch noch kostspielig entsorgt werden müssen. Die Abmessungen verschiedener Lebensmittellaibe, auch des untereinander gleichen Typs oder der gleichen Hersteller, unterscheiden sich durchaus und machen jeweils vollständige Neueinstellungen der sehr komplizierten mechanischen Elemente erforderlich, wenn denn ein optimaler Schnitt oder eine optimale Fräsung erfolgen soll.

Darüber hinaus sind die entsprechenden Apparaturen ausgesprochen teuer und aufwändig und es ist häufig nicht möglich, sie am Ort der Herstellung des entsprechenden Lebenmittellaibs vorzuhalten. Das wiederum hat zur Folge, dass erhebliche Kosten für den Transport der schweren Lebensmittellaibe zu diesen Entfernungsstationen für die Kunststoffbeschichtung aufgebracht werden müssen, wobei darüber hinaus anschließend auch ein Rücktransport für den nächsten Verfahrensschritt des Schneidens und Verpackens für die weitere Verbreitung im Lebensmittelhandel anfallen.

Aufgabe der Erfindung ist es daher, ein Verfahren vorzuschlagen, mit denen eine alternative Entfernungsmöglichkeit für die Kunststoffbeschichtung eines Lebensmittellaibes gegeben wird.

Diese Aufgabe wird erfindungsgemäß durch ein gattungsgemäßen Verfahren gelöst, bei dem die Leistung des Lasers, welcher den Laserstrahl abgibt, so eingestellt wird, dass ein Abtrag der Kunststoffbeschichtung durch Abtrennung eines Bereichs der Kunststoffbeschichtung und/oder durch Erosion oder Verdampfung der Kunststoffbeschichtung erfolgt, dass zu dem Laserstrahl in den Bereich des Auftreffens auf den Lebensmittellaib ein Gas zugeführt wird, insbesondere ein Schutzgas und/oder ein den Abtragsvorgang unterstützendes Gas und/oder ein die Anhaftung von abgetragenem Material am verbleibenden Lebensmittel reduzierendes Gas, und dass im Bereich des Auftreffens des Laserstrahls auf dem Lebensmittellaib ein Absaugen von Gas und von abgetragenem Material erfolgt.

Durch die Erfindung entsteht ein innovatives und wirtschaftliches Verfahren zur Entplastifizierung von Käselaiben, also zur Entfernung der Kunststoffbeschichtung, mit der Käselaibe bisher umgeben sind.

In ganz anderem Zusammenhang ist es aus der DE 38 36 821 A1, der EP 0 421 837 B1 und der US 5,120,928 A bekannt, die Oberfläche von Käse- oder Wurstwaren mittels eines Lasers mit Kennzeichnungen zu markieren, beispielsweise um die Sorte eines Lebensmittels dort kenntlich zu machen oder Strichcodes oder Marken oder auch andere Angaben über die Herstellung fest an dem Lebensmittellaib anzubringen. Dabei wird eine örtliche Erwärmung des unverhüllten Lebensmittellaibs durch den Laserstrahl vorgenommen, wodurch dieser eine leicht braune Färbung annimmt. Eine Entfernung von Bestandteilen des Lebensmittellaibs oder gar von einer Rinde oder einer Umhüllung ist dabei nicht vorgesehen und dazu wären die beschriebenen Verfahren auch gar nicht in der Lage.

Die erfindungsgemäß vorzusehenden Leistungen der Laser, die den Laserstrahl abgeben sollen, liegen beim Tausend- bis Zehntausendfachen der Leistung der Laser in den für die Kennzeichnung von Lebensmittellaiben eingesetzten Laser".

Erfindungsgemäß wird auch nicht der Käselaib selbst behandelt, sondern stattdessen die Kunststoffumhüllung, auch als Plastikcoat bezeichnet, entfernt. Zwei Möglichkeiten bestehen, um mit Hilfe eines Laserstrahls die Kunststoffbeschichtung von den Käselaiben zu entfernen. Zum Einen kann der Laserstrahl wie eine Art Messer zum Abtrennen der nicht gewünschten äußersten Schichten des Käselaibes, insbesondere also der Kunststoffbeschichtung, verwendet werden, wobei die genauen Positionen mittels Messverfahren und Steuerung des Lasers gewählt werden können.

Zum Anderen kann der Laserstrahl auch zur Erosion der Kunststoffbeschichtung eingesetzt werden. Insbesondere kommt eine Verdampfung des Materials der Kunststoffbeschichtung durch die Laserstrahlen in Betracht. Dies bedeutet, dass er die Kunststoffbeschichtung von außen her aufschmilzt oder verdampft und auf diese Weise die Kunststoffbeschichtung von außen in Richtung zum Zentrum des Käselaibes her erodiert und entfernt. Auch der Fortschritt dieser Bewegung kann entsprechend durch Messung verfolgt und gesteuert werden.

Neben einer Verdampfung des Materials der Kunststoffbeschichtung kommt auch eine Verbrennung des Materials in Betracht.

Laserstrahlen haben einen großen Vorteil. Sie führen zwar gemäß der Erfindung relativ viel Energie zu, die zum Verdampfen des Materials der Kunststoffbeschichtung ausreicht, jedoch nur sehr kurzzeitig. Das Kunststoffmaterial ist dann verdampft und nicht mehr um den Käselaib vorhanden. Das bedeutet aber auch, dass anders als bei einer Langzeiterwärmung etwa durch konduktive Wärmezufuhr keine Beeinträchtigung des Käses oder des sonstigen Lebensmittels des entsprechenden Laibs erfolgt. Dieser wird nicht beziehungsweise nur geringfügig erwärmt und somit in seinem Geschmack nicht verändert.

Besonders bevorzugt ist es, wenn ein Laserstrahl eines CO₂-Lasers eingesetzt wird. CO₂-Laser arbeiten mit einer Wellenlänge von etwa 10,6 µm. Mit dieser Wellenlänge kann gerade in polymeren Werkstoffen, also in Rinden aus Polymerkunststoffen, wie sie bei Lebensmittellaiben viel verwendet werden, eine sehr hohe Absorption erzielt werden. Außerdem ist eine hohe Leistung bei einer guten Strahlqualität bei derartigen Lasern verfügbar. Daraus folgt, dass hohe Leistungsdichten möglich werden. Die Investitionskosten für derartige Laser sind darüber hinaus überschaubar und mithin wirtschaftlich darstellbar. CO₂-Laser sind darüber hinaus betriebsbewährt und zuverlässig.

Bevorzugt erfolgt eine trennscharfe Regelung der Laserleistung, um die Kunststoffbeschichtung vollständig abzutragen.

Dabei ist insbesondere vorgesehen, dass die Leistung des Lasers, welcher den Laserstrahl abgibt, so eingestellt wird, dass ein vollständiger Abtrag der Kunststoffbeschichtung durch vollständige Abtrennung der Kunststoffbeschichtung erfolgt.

In einer anderen alternativen Ausführungsform erfolgt gezielt ein Abtragen beziehungsweise ein Mitverbrennen oder -verdampfen der Matrix des Käselaibs also insbesondere der Käsematrix, um sicherzustellen, dass auch durch Unebenheiten der Oberfläche des Käselaibs in Vertiefungen vorhandene Kunststoffbeschichtung mit abgetragen wird. Durch den Laser beaufschlagte Regionen werden bei dieser Ausführungsform also gezielt bis in die äußersten Schichten des Käselaibs selbst gelegt, um eine vollständige Entfernung sicherzustellen.

Zwar werden bei diesen Ausführungsformen auch Oberflächenbereiche des Käselaibs mit abgetragen, was zu geringen Verlusten an entsprechendem Material des Käselaibs führt. Die Qualität des verbleibenden Käselaibs erhöht sich jedoch dadurch, da mit Sicherheit ausgeschlossen werden kann, dass noch Kunststoffbeschichtungsreste verbleiben. Die Bearbeitungsgrenze wird quasi auf die sichere Seite in das Lebensmittel hinein verlagert.

Möglich ist es auch, gleiche Flächenbereiche mehrfach zu bearbeiten, um eine rückstandsfreie Oberfläche des Käselaibs freizulegen.

Durch gezielte Auswahl der Laserquellen lassen sich definierte Leistungsbereiche mit spezifischen Laserintensitäten auswählen.

Der Laserbetrieb ist sowohl in einem Dauerstrichmodus (CW) als auch im Pulsbetrieb möglich. Auch eine Kombination beider Betriebsformen ist denkbar, wenn diese bei speziellen Oberflächenformen oder bestimmten Rindenwerkstoffen der Käselaibe sinnvoll einsetzbar ist. Die Betriebsart kann hinsichtlich der Bearbeitungsergebnisse und Regelungsmöglichkeiten gewählt und die Laserparameter entsprechend angepasst werden.

Die entsprechenden Laserabtragverfahren sind in der Lage, alle Lebensmittelstandards einzuhalten. Dabei kann die unterschiedliche Leistungsstärke verschiedener Laser und auch die Einstellbarkeit genutzt werden. Verschiedene Vorschubgeschwindigkeiten können eingesetzt werden. Auch die Fokuslage des Lasers ist einstellbar und kann auf die optimale Entfernung der Kunststoffbeschichtung ausgerichtet werden.

Darüber hinaus kann die Bearbeitung mit Scanneroptiken unterstützt werden. Diese Optiken können mehrere bewegte Spiegel und transmissive optische Elemente aufweisen und auf diese Weise eine schnelle Strahlführung und eine Fokusnachführung relativ zur bearbeiteten Oberfläche ermöglichen, und zwar sowohl lateral wie auch orthogonal. In diesem Zusammenhang sind sowohl Portalsysteme mit ruhendem wie auch mit bewegtem Werkstück denkbar. Die Scanneroptik kann linear über dem Werkstück bewegt werden oder alternativ das Werkstück linear unter einer feststehenden Scanneroptik hinweg bewegt werden. Möglich sind auch Systeme mit im Raum bewegter Scanneroptik, die beispielsweise mittels Handhabungsrobotern betätigt werden.

Es kann dabei mit begrenzten Bearbeitungsflächen oder Bearbeitungsfeldern im Bereich der Berindungen der Käselaibe gearbeitet werden. Dabei findet ein Bearbeitungsablauf statt, der einzelne Bearbeitungsflächen so aneinander legt, dass auch die dazwischen liegenden Grenzbereiche rückstandsfrei abgetragen werden. Hierzu können auch Bearbeitungsstrategien eingesetzt werden, die den gezielten Abtrag in Bereichen angrenzender Bearbeitungsfelder ermöglichen.

Es kann zusätzlich eine Abstandsmesseinrichtung eingesetzt werden, die koaxial zum Laserstrahl auf die Werkstückoberfläche gerichtet ist. Alternativ oder zusätzlich kann die Abstandsmesseinrichtung auch seitlich angeordnet werden und den Abstand der Scanneroptik zum Auftreffpunkt des Laserstrahls messen. Dabei werden optische Verfahren mittels Laufzeitmessung oder Triangulation bevorzugt.

Eine weitere Möglichkeit bei Ausführungsformen der Erfindung besteht in der vorlaufenden Erfassung der Oberfläche. Dies kann beispielsweise mittels Kameramesssystemen erfolgen, die eine Erfassung und Vermessung der Oberflächentopographie ermöglichen.

Mit ähnlichen Verfahren kann nicht nur eine Steuerung der Laserbearbeitung verwendet werden, sondern diese Oberflächenerfassung kann zusätzlich oder alternativ auch für Qualitätssicherungszwecke eingesetzt werden, etwa um Mängel oder bestimmte Markierungen oder sonstige Eigenschaften an Käselaibern automatisch zu erkennen.

Weitere Ausführungsformen besitzen Mess- und Regeleinrichtungen, mit denen optische Rückwirkungen aus dem Bearbeitungsprozess in Echtzeit erfasst werden können. Dies kann für eine schnelle Regelung der Laserleistungsdichte genutzt werden, also für eine Regelung der Laserleistung und/oder der Fokuslage. Auch die Streckenenergie kann damit geregelt werden, das ist das Verhältnis aus Laserleistung und Vorschubgeschwindigkeit.

Die Mess- und Regeleinrichtungen können dabei beispielsweise charakteristische Spektrallinien des Bearbeitungsprozesses detektieren, vorzugsweise aus dem thermischen Prozess einer Erosion der Kunststoffbeschichtung des Käselaibs. Diese charakteristischen Spektrallinien können dann für eine Regelung herangezogen werden.

Besonders bevorzugt ist es, wenn zu dem Laserstrahl in den Bereich des Auftreffens auf den Käselaib ein Gas zugeführt wird, insbesondere ein Schutzgas und/oder ein den Abtragsvorgang unterstützendes Gas und/oder ein die Anhaftung von abgetragenem Material am verbleibenden Lebensmittel reduzierendes Gas.

Dadurch kann einerseits das Käselaib selbst geschützt und andererseits auch die Umgebung und dort etwa befindliche Personen vor den abgetragenen Reststoffen geschützt werden.

Eine gezielte Zuführung von entsprechenden Prozessgasen, insbesondere von Luft oder Sauerstoff oder Gemischen mit diesen Gasen, kann zur besseren Verdampfung und auch Oxidation mit Verbrennung der Kunststoffbeschichtung und zugleich auch zur Reduzierung von sogenannten Redepositen, also von Verbrennungsrückständen, herangezogen werden.

Bei Versuchen hat sich herausgestellt, dass bei einem zunehmenden Sauerstoffgehalt des zugeführten Gases die Emissionen leichtflüchtiger Kohlenwasserstoffe abnehmen. Die bearbeitete Oberfläche des Käselaibs nach dem erfindungsgemäßen Vorgehen bei einer Verwendung von Gasen mit zunehmendem Sauerstoffgehalt wird homogener. Sie ist also mit weniger Redepositen behaftet.

Weitere Tests zeigten, dass auch eine kühlende Wirkung durch die zugeführten Gase eintreten kann, was einen negativen Einfluss auf die Verbrennung und/oder die auftretenden Emissionen haben könnte. Dies kann natürlich in weiteren Ausführungsformen entsprechend berücksichtigt werden.

Eine hohe Flächenleistung ist möglich und die Kunststoffbeschichtung ist vollständig entfernbar.

In einer Ausführungsform wird ferner vorgesehen, eine automatische Erkennung von nichtbeschichteten Oberflächenbereichen der Käselaibe vorzusehen. Dadurch kann eine Doppelbehandlung automatisch vermieden werden.

Eine weitere Ausführungsform sieht vor, dass in die Kunststoffbeschichtung oder unter Umständen auch in die Oberfläche der Matrix des Käselaibs Farbpigmente eingebracht werden, insbesondere dunkle Farbpigmente. Auf diese Weise kann eine höhere Absorption der aufgebrachten Laserenergie herbeigeführt werden und zugleich eine Optimierung der Verbrennung oder Verdampfung der Kunststoffbeschichtung herbeigeführt werden.

Die erwähnten Farbpigmente sind "dunkel" im Sinne einer guten Absorption für die eingesetzte Laserleistung des speziell eingesetzten Lasers. Bei der Verwendung von CO₂-Lasern können beispielsweise auch helle organische oder wasserhaltige Materialien als derartige Farbpigmente eingesetzt werden.

In weiteren Ausführungsformen wird auch eine Nachbehandlung des behandelten Käselaibs, mittels eines flüssigen Mediums durchgeführt. Das kann sich zum Beispiel in einem Schritt des Eintauchens in oder Abspülens mit Salzlake realisieren lassen.

Möglich ist es auch, eine Nachbearbeitung der bearbeiteten und entfernten Rinde des Käselaibs vorzunehmen, beispielsweise durch eine Abbürstung der bearbeiteten Oberflächen, um auf diese Weise Bearbeitungs- und/oder Beschichtungsrückstände zu entfernen.

Mit den erfindungsgemäß vorgeschlagenen Maßnahmen ist eine sehr schnelle Bearbeitung von Bearbeitungsflächen von 2.500 mm² möglich. Die Bearbeitung sehr großer Bearbeitungsflächen kann vorzugsweise durch Scannen des Laserstrahls erfolgen. Dieses Scannen erfolgt beispielsweise meanderförmig, um mit einer hohen Flächenleistung, also einer hohen Leistung von Fläche pro Zeit, einen Abtrag großer Oberflächenbereiche in kürzester Zeit durch das Abrastern von Linien oder Punkten zu realisieren.

Die Bearbeitungszeiten dafür können auf Zeiträume von weniger als 1 Sekunde gesenkt werden. Die Bearbeitungsflächen werden so konzipiert, dass sie aneinander angrenzen.

In weiteren Ausführungsformen ist vorgesehen, die Emissionen aus dem Bearbeitungsprozess zur Überwachung des Bearbeitungsergebnisses und der Produktqualität zu erfassen und zu analysieren. Dies kann in situ oder auch nachfolgend vorgenommen werden und für Maßnahmen der Qualitätssicherung und Rückverfolgbarkeit genutzt werden.

Es ist auch möglich, die bei einem Absaugen der Reste entstehenden Rauchgase zu analysieren und ihre Emission zu charakterisieren. Natürlich kann auch der Käse nach der Entfernung der Beschichtung entsprechend untersucht und Geschmackstesten unterzogen werden, um Rückschlüsse auf Änderungen der Einstellung bei den Laserstrahlen zu finden.

Von weiterem Vorteil ist es, wenn nach der Durchführung des Verfahrens ein Qualitätssicherungsschritt vorgenommen wird.

Es ist auch möglich, sehr unterschiedliche Kunststoffbeschichtungen auf diese Weise zu entfernen. Gegebenenfalls sind dabei die eingesetzten Laser beziehungsweise die verwendeten Parameter entsprechend anzupassen.

Testergebnisse haben bereits gezeigt, dass keinerlei Verschlechterung der verschiedenen laserbehandelten Käselaibe im Vergleich zu unbehandelten gleichartigen Käselaiben stattfindet. In Tests hat es sich bereits als möglich herausgestellt, Flächen von 2.500 mm² oder mehr nahtlos zu entplastifizieren.

Durch die Erfindung ergeben sich auch weitere, neue Möglichkeiten für die Kunststoffbeschichtungen selbst. So können die Kunststoffbeschichtungen gezielt im Voraus für eine besonders gute Wirkung der Laserstrahlen vorbereitet oder ausgesucht werden. Die in den Kunststoffbeschichtungen meist verwendeten Polymerschichten können so angepasst werden, dass sie eine erhöhte Empfindlichkeit bei der Absorption für die verwendete Laserstrahlung besitzen. Dies kann entweder durch eine geänderte entsprechende Polymerzusammensetzung geschehen, oder aber auch durch das Einfügen von absorptionserhöhenden Pigmenten in den Polymerschichten der Kunststoffbeschichtung. Auch die Laserwellenlängen können an diese Pigmente oder überhaupt auf die Auswahl der Kunststoffbeschichtung abgestimmt werden. Es ist dadurch ein interessantes Zusammenspiel möglich, das dann zu einem optimalen späteren Abtrag der Kunststoffbeschichtung genutzt werden kann. Insbesondere ist dadurch ein trennscharfer Abtrag der Kunststoffbeschichtung und eine besonders geringe Beeinflussung des mit der Kunststoffbeschichtung umgebenen Käselaibs gegeben.

## Patentansprüche

1. Verfahren zur Entfernung einer Kunststoffbeschichtung von einem Käselaib, mit folgenden Schritten:
a) der Käselaib, mit einer Kunststoffbeschichtung, wird dem Verfahren zugeführt,
b) ein Laserstrahl wird auf die Kunststoffbeschichtung des Käselaibs gerichtet,
**dadurch gekennzeichnet,**
**dass**
c) die Leistung des Lasers, welcher den Laserstrahl abgibt, so eingestellt wird, dass ein Abtrag der Kunststoffbeschichtung durch Abtrennung eines Bereichs der Kunststoffbeschichtung und/oder durch Erosion oder Verdampfung der Kunststoffbeschichtung erfolgt,
**dass**
d) zu dem Laserstrahl in den Bereich des Auftreffens auf den Lebensmittellaib ein Gas zugeführt wird, insbesondere ein Schutzgas und/oder ein den Abtragsvorgang unterstützendes Gas und/oder ein die Anhaftung von abgetragenem Material am verbleibenden Lebensmittel reduzierendes Gas, und
**dass**
e) im Bereich des Auftreffens des Laserstrahls auf den Lebensmittellaib ein Absaugen von Gas und von abgetragenem Material erfolgt.

2. Verfahren nach Anspruch 1,
**dadurch gekennzeichnet,**
**dass** die Leistung des Lasers, welcher den Laserstrahl abgibt, so eingestellt wird, dass ein vollständiger Abtrag der Kunststoffbeschichtung durch vollständige Abtrennung der Kunststoffbeschichtung erfolgt.

3. Verfahren nach Anspruch 1 oder 2,
**dadurch gekennzeichnet,**
**dass** ein gezieltes Abtragen der äußersten Bereiche der Matrix des Käselaibs erfolgt.

4. Verfahren nach einem der vorstehenden Ansprüche,
**dadurch gekennzeichnet,**
**dass** der Laserstrahl ein CO₂-Laserstrahl ist.

5. Verfahren nach einem der vorstehenden Ansprüche,
**dadurch gekennzeichnet,**
**dass** der Laserstrahl bewegt wird und den Käselaib sukzessive überstreicht, und/oder
**dass** der Käselaib bewegt und durch die Bewegung sukzessive dem Laserstrahl ausgesetzt wird.

6. Verfahren nach einem der vorstehenden Ansprüche,
**dadurch gekennzeichnet,**
**dass** der Laserstrahl im Dauerstrichmodus und/oder pulsend den Käselaib beaufschlagt.

7. Verfahren nach einem der vorstehenden Ansprüche,
**dadurch gekennzeichnet,**
**dass** eine Führung des Laserstrahls über optische Elemente, insbesondere einen oder mehrere bewegte Spiegel und/oder ein oder mehrere transmissive optische Elemente relativ zur zu bearbeitenden Oberfläche des Lebensmittellaibs geführt wird.

8. Verfahren nach einem der vorstehenden Ansprüche,
**dadurch gekennzeichnet,**
**dass** bei oder nach der Zuführung des Käselaibs zu dem Verfahren eine Vermessung der Geometrie, insbesondere des Abstandes des Käselaibs zum Laserstrahl erfolgt, und
**dass** die Werte dieser Messung einer Steuerungseinrichtung zugeführt werden, welche eine Nachführung des Laserstrahls und/oder des Käselaibs vornimmt.

9. Verfahren nach einem der vorstehenden Ansprüche,
**dadurch gekennzeichnet,**
**dass** in der Steuerungseinrichtung in Abhängigkeit von der zu beobachtenden Abtragsgeschwindigkeit durch den Laserstrahl eine Regelung der Laserleistung und/oder der Geschwindigkeit der Bewegung des Käselaibs erfolgt.

10. Verfahren nach einem der vorstehenden Ansprüche,
**dadurch gekennzeichnet,**
**dass** die abgesaugten Gase, die Umgebungsluft und die Prozessemissionen filtriert werden.

11. Verfahren nach einem der vorstehenden Ansprüche,
**dadurch gekennzeichnet,**
**dass** vor der Weiterbearbeitung des Käselaibs und nach der Abtragung der Kunststoffbeschichtung eine insbesondere mechanische und/oder pneumatische Reinigung der Oberfläche des verbleibenden Käselaibs erfolgt, insbesondere durch Abbürsten von Bearbeitungs- und Beschichtungsrückständen.

12. Verfahren nach einem der vorstehenden Ansprüche,
**dadurch gekennzeichnet**
**dass** nach der Durchführung des Verfahrens ein Qualitätssicherungsschritt vorgenommen wird.

13. Verfahren nach Anspruch 12,
**dadurch gekennzeichnet,**
**dass** eine Identifizierung und Kennzeichnung der eingehenden und ausgehenden Käselaibe zur Produkt- bzw. Chargennachverfolgung vorgenommen wird.

14. Verfahren nach einem der vorstehenden Ansprüche,
**dadurch gekennzeichnet,**
**dass** eine automatische Erkennung von nichtbeschichteten Oberflächenbereichen des Käselaibs erfolgt.

15. Verfahren nach einem der vorstehenden Ansprüche,
**dadurch gekennzeichnet,**
**dass** in die Kunststoffbeschichtung oder in die Oberfläche der Matrix des Käselaibs Farbpigmente, insbesondere dunkle Farbpigmente vor der Durchführung des Verfahrens eingebracht werden, welche eine höhere Absorption der Laserenergie ergeben.

## Claims

1. Process for the removal of a plastic coating from a cheese loaf, the process having the following steps:
a) the cheese loaf, with a plastic coating, is fed to the process,
b) a laser beam is directed onto the plastic coating of the cheese loaf, **characterized in that**
c) the power of the laser which emits the laser beam is adjusted so that a removal of the plastic coating ensues by detachment of a region of the plastic coating and/or by erosion or evaporation of the plastic coating,
**in that**
d) a gas is fed to the laser beam in the area of impingement onto the food loaf, in particular a protective gas and/or a gas supporting the removal process and/or a gas reducing the adhesion of removed material to the remaining food, and
**in that**
e) in the area of impingement of the laser beam onto the food loaf, gas and removed material are vacuumed off.

2. Process according to claim 1, **characterized in that** the power of the laser which emits the laser beam is adjusted so that a complete removal of the plastic coating ensues by complete detachment of the plastic coating.

3. Process according to claim 1 or 2, **characterized in that** a targeted removal of the outermost areas of the matrix of the cheese loaf ensues.

4. Process according to one of the preceding claims, **characterized in that** the laser beam is a CO₂ laser beam.

5. Process according to one of the preceding claims, **characterized in that** the laser beam is moved and successively sweeps over the cheese loaf, and/or
**in that** the cheese loaf is moved and is successively exposed to the laser beam as a result of the movement.

6. Process according to one of the preceding claims, **characterized in that** the laser beam hits the cheese loaf in continuous wave mode and/or in a pulsing manner.

7. Process according to one of the preceding claims, **characterized in that** a guidance of the laser beam is guided relative to the surface of the food loaf to be processed via optical elements, in particular via one or more moving mirrors and/or one or more transmissive optical elements.

8. Process according to one of the preceding claims, **characterized in that** during or after feeding of the cheese loaf to the process, a measurement of the geometry, in particular of the distance of the cheese loaf to the laser beam, takes place, and
**in that** the values of this measurement are fed to a control device which performs a tracking of the laser beam and/or of the cheese loaf.

9. Process according to one of the preceding claims, **characterized in that** controlling of the laser power and/or of the speed of movement of the cheese loaf takes place in the control device in dependence on the observed rate of removal by the laser beam.

10. Process according to one of the preceding claims, **characterized in that** the vacuumed-off gases, the ambient air and the process emissions are filtered.

11. Process according to one of the preceding claims, **characterized in that** prior to further processing of the cheese loaf and after the removal of the plastic coating, an in particular mechanical and/or pneumatical cleaning of the surface of the remaining cheese loaf ensues, in particular by brushing off residues of processing and coating.

12. Process according to one of the preceding claims, **characterized in that** after the procedure has been carried out, a quality assurance step is carried out.

13. Process according to claim 12, **characterized in that** an identification and labelling of the incoming and outgoing cheese loaves for tracking of the product or batch is carried out.

14. Process according to one of the preceding claims, **characterized in that** an automatic detection of non-coated surface areas of the cheese loaf takes place.

15. Process according to one of the preceding claims, **characterized in that** colour pigments, in particular dark colour pigments which result in a higher absorption of the laser energy, are introduced into the plastic coating or into the surface of the matrix of the cheese loaf before the process is carried out.

## Revendications

1. Procédé pour enlever une couche de plastique d'un pain de fromage, le procédé comprenant les étapes suivantes:
a) le pain de fromage, avec un revêtement plastique, est introduit dans le procédé,
b) un faisceau laser est dirigé sur le revêtement plastique du pain de fromage, **caractérisé en ce que**
c) la puissance du laser qui émet le faisceau laser est réglée de telle sorte qu'il s'ensuit un enlèvement de la couche de plastique par détachement d'une région de la couche de plastique et/ou par érosion ou évaporation de la couche de plastique,
**en ce que**
d) un gaz est amené au faisceau laser dans la zone d'impact sur le pain alimentaire, en particulier un gaz protecteur et/ou un gaz favorisant le processus d'enlèvement et/ou un gaz réduisant l'adhérence de la matière enlevée à l'aliment restant, et
**en ce que**
e) dans la zone d'impact du faisceau laser sur le pain alimentaire, le gaz et la matière enlevée sont aspirés.

2. Procédé selon la revendication 1, **caractérisé en ce que** la puissance du laser qui émet le faisceau laser est ajustée de manière à ce qu'une élimination complète du revêtement plastique s'ensuive par un détachement complet du revêtement plastique.

3. Procédé selon la revendication 1 ou 2, **caractérisé en ce qu'**il s'ensuit un enlèvement ciblé des zones les plus extérieures de la matrice du pain de fromage.

4. Procédé selon l'une des revendications précédentes, **caractérisé en ce que** le faisceau laser est un faisceau laser CO₂.

5. Procédé selon l'une des revendications précédentes, **caractérisé en ce que** le faisceau laser est déplacé et balaie successivement le pain de fromage, et/ou **en ce que** le pain de fromage est déplacé et est successivement exposé au faisceau laser du fait du déplacement.

6. Procédé selon l'une des revendications précédentes, **caractérisé en ce que** le faisceau laser frappe le pain de fromage en onde continue et/ou de manière puisée.

7. Procédé selon l'une des revendications précédentes, **caractérisé en ce qu'**un guidage du faisceau laser est réalisé par rapport à la surface à traiter du pain alimentaire par l'intermédiaire d'éléments optiques, notamment par un ou plusieurs miroirs mobiles et/ou un ou plusieurs éléments optiques transmissifs.

8. Procédé selon l'une des revendications précédentes, **caractérisé en ce que** pendant ou après l'amenée du pain de fromage au procédé, une mesure de la géométrie, notamment de la distance du pain de fromage au faisceau laser, est effectuée, et
**en ce que** les valeurs de cette mesure sont fournies à un dispositif de commande qui effectue un suivi du faisceau laser et/ou du pain de fromage.

9. Procédé selon l'une des revendications précédentes, **caractérisé en ce qu'**une régulation de la puissance du laser et/ou de la vitesse de déplacement du pain de fromage a lieu dans le dispositif de commande en fonction de la vitesse à observer d'élimination par le faisceau laser.

10. Procédé selon l'une des revendications précédentes, **caractérisé en ce que** les gaz aspirés, l'air ambiant et les émissions du procédé sont filtrés.

11. Procédé selon l'une des revendications précédentes, **caractérisé en ce qu'**avant la poursuite du traitement du pain de fromage et après l'enlèvement du revêtement plastique, il est procédé à un nettoyage, notamment mécanique et/ou pneumatique, de la surface du pain de fromage restant, notamment par brossage des résidus de traitement et de revêtement.

12. Procédé selon l'une des revendications précédentes, **caractérisé en ce qu'**après la mise en œuvre du procédé, une étape d'assurance qualité est réalisée.

13. Procédé selon la revendication 12, **caractérisé en ce qu'**une identification et un étiquetage des pains de fromage entrants et sortants pour le suivi du produit ou du lot sont réalisés.

14. Procédé selon l'une des revendications précédentes, **caractérisé en ce qu'**une détection automatique des zones de surface non revêtues du pain de fromage a lieu.

15. Procédé selon l'une des revendications précédentes, **caractérisé en ce que** des pigments de couleur, notamment des pigments de couleur foncée qui entraînent une absorption plus importante de l'énergie laser, sont introduits dans le revêtement plastique ou dans la surface de la matrice du pain de fromage avant la mise en œuvre du procédé.
